**Europäisches Patentamt**

**European Patent Office**

**Office européen des brevets**

(11) Veröffentlichungsnummer: **0 115 590**
**B1**

(12) # EUROPÄISCHE PATENTSCHRIFT

(45) Veröffentlichungstag der Patentschrift:
18.03.87

(51) Int. Cl.⁴: **F 15 B 11/05,** A 01 B 63/10

(21) Anmeldenummer: **83112172.8**

(22) Anmeldetag: **03.12.83**

(54) **Hydraulische Steuereinrichtung.**

(30) Priorität: **30.12.82 DE 3248606**
**18.05.83 DE 3318052**

(43) Veröffentlichungstag der Anmeldung:
**15.08.84 Patentblatt 84/33**

(45) Bekanntmachung des Hinweises auf die Patenterteilung:
**18.03.87 Patentblatt 87/12**

(84) Benannte Vertragsstaaten:
**DE FR GB IT**

(56) Entgegenhaltungen:
**DE-A-2 159 766**
**DE-A-2 702 953**
**FR-A-2 373 703**
**FR-A-2 498 698**
**US-A-3 592 216**
**US-A-4 343 151**

(73) Patentinhaber: **ROBERT BOSCH GMBH, Postfach
50, D-7000 Stuttgart 1 (DE)**

(72) Erfinder: **Höfer, Friedrich- Wilhelm, Georg-
Friedrich- Händel- Weg 6, D-7257 Ditzingen 5 (DE)**
Erfinder: **Schwerin, Günther, Hohenstaufenstrasse
15, D-7141 Möglingen (DE)**

## Beschreibung

### Stand der Technik

Die Erfindung geht aus von einer hydraulischen Steuereinrichtung nach der Gattung des Hauptanspruchs.

Es ist schon eine solche Steuereinrichtung aus der DE-A-3102 505 (FR-A-2498 698) bekannt, die mit einem Regelventil zur proportionalen Steuerung eines Druckmittelstromes zu einem einfachwirkenden Hydromotor arbeitet, wobei das Regelwentil zur Erfüllung hoher Dichtheitsanforderungen den Hydromotor durch einen Sperrblock absichert. Ein den Druckmittelstrom zum Hydromotor beeinflussender Steuerschieber im Regelventil arbeitet mit einem vorgeschalteten Hilfsschieber derart zusammen, daß eine Dreiwege-Stromregelung möglich ist. Von Nachteil bei dieser Steuereinrichtung ist, daß der Hilfsschieber Teil eines Umschaltventils ist und deswegen das Regelventil nur in einem offenen Kreislauf verwendet werden kann. Dagegen eignet sich die Steuereinrichtung nicht für einen geschlossenen Kreis. Zudem arbeitet die Steuereinrichtung dann nicht als lastdruckabhängiges System, was unter Umständen zu erhöhten Energieverlusten führen kann.

Ferner ist aus der US-A- 3 592 216, Figur 4 eine hydraulische Steuereinrichtung bekannt, bei der in einem lastdruckabhängig arbeitenden System zwei doppeltwirkende Hydromotoren jeweils über ein Wegeventil von einer Verstellpumpe weitgehend unabhängig voneinander mit Druckmittel versorgbar sind. Dabei wird die Verstellpumpe von einer Reglerfeder in einer zugeordneten Stelleinrichtung sowie von dem ausgewählten, maximalen Lastdruck in Richtung maximaler Fördermenge verstellt. Obwohl diese Steuereinrichtung in vorteilhafter Weise als lastdruckabhängiges System in einem geschlossenen Kreis arbeitet, hat es doch den Nachteil, daß es zur Steuerung von doppeltwirkenden Hydromotoren mit geeigneten Wegeventilen mit zwei Motoranschlüssen arbeitet und deshalb aufwendig baut. Zudem genügen die Wegeventile ohne sperrende Sitzventile keinen hohen Dichtheitsanforderungen. Zur Steuerung eines einfachwirkenden Hydromotors eignet sich diese Steuereinrichtung schlecht. Weiterhin arbeiten die Regelventile mit unterschiedlichen Versorgungsdrücken, wodurch die Empfindlichkeit der Steuerung in unerwünschter Weise verändert wird.

Ferner ist aus der DE-A- 2702 953 eine hydraulische Steuereinrichtung bekannt, bei der ein Lenkventil von einer lastdruckabhängig gesteuerten Verstellpumpe mit Druckmittel versorgt wird. Um hier Schwankungen der Empfindlichkeit des Lenkventils auszuschalten, wenn unterschiedliche Verstellpumpen mit verschiedenen Versorgungsdrücken verwendet werden, ist zwischen Verstellpumpe und Lenkventil ein Druckabfallventil geschaltet. Durch Austausch der Feder am Druckabfallventil kann bei Verwendung verschiedener Verstellpumpen mit unterschiedlichen Versorgungdrücken das am Lenkventil verfügbare Druckgefälle und damit dessen Empfindlichkeit konstant gehalten werden. Diese Steuereinrichtung arbeitet zwar in vorteilhafter Weise als lastdruckabhängiges System in einem geschlossenen Kreis; sie hat aber doch den Nachteil, daß sie sich wenig zur Steuerung eines einfachwirkenden Hydromotors eignet, der zudem besonders dicht abgesperrt werden soll. Außerdem ist der Austausch einer Feder in vielen Fällen aufwendig und unerwünscht.

### Vorteile der Erfindung

Die erfindungsgemäße Steuereinrichtung mit den kennzeichnenden Merkmalen des Hauptanspruchs hat demgegenüber den Vorteil, daß sie die Vorteile der vorbekannten Einrichrungen in sich vereint, indem sie eine lastdruckabhängig arbeitende, energiesparende Steuereinrichtung ermöglicht, mit der ein einfachwirkender Hydromotor genau und sicher steuerbar ist. Vor allem kann bei einem Parallelbetrieb zusätzlicher Hydromotoren und damit stark schwankenden Versorgungsdrücken das Regelventil beim Heben wie beim Senken mit gleichbleibender Empfindlichkeit arbeiten. Ferner werden beim Senken des einfachwirkenden Hydromotors die Energieverluste auch dann niedrig gehalten, wenn ein zusätzlicher Hydromotor mit maximalem Lastdruck gefahren wird. Dabei sorgt der Sperrblock stets für eine sichere Abdichtung des Hydromotors. Besonders zweckmäßig hierbei ist, daß der beim Hebenvorgang des ersten Hydromotors im Arbeitsdruckmittelstrom als Druckkompensationsschieber arbeitende Drosselschieber so ausgebildet und verschaltet ist, daß er zugleich beim Senkenvorgang nun im Steuerstrom liegend als Druckminderer arbeitet und unabhängig vom Pumpendruck einen konstanten Steuerdruck für die Senkstromregelung zur Verfügung stellt, was eine einfache Bauweise begünstigt.

Durch die in den Unteransprüchen aufgeführten Maßnahmen sind vorteilhafte Weiterbildungen und Verbesserungen der im Hauptanspruch angegebenen Steuereinrichtung möglich. Die Empfindlichkeit des Regelventils für den einfachwirkenden Verbraucher kann selbst dann gleichbleibend gehalten werden, wenn die Steuereinrichtung gemäß Anspruch 7 ausgebildet wird und damit am Steuerschieber ein relativ hohes Druckgefälle zur Verfügung steht.

Besonders vorteilhaft ist ferner eine Ausbildung gemäß Anspruch 8, wodurch dann am Steuerschieber nicht mehr der von der Reglerfeder der Verstellpumpe verursachte Ausgangsdruck, der auch Standby-Druck genannt wird, abfällt, sondern nur noch das von der Feder am Drosselschieber verursachte, erheblich niedrigere Druckgefälle. Beim Heben wie beim Senken kann somit mit einem kleineren Druckgefälle gearbeitet werden. Dies hat den Vorteil, daß als Steuerschieber ein Bauelement verwendbar ist, wie es bei offenen Druckmittel-Kreisläufen eingesetzt wird und das mit weniger Druckgefälle arbeiten kann. Zudem bietet die schwächere Feder am Drosselschieber Vorteile hinsichtlich Kennlinie, Bauraum und Kosten. Fernerhin ist bei einer schwächeren Feder die Steuerfase am Drosselschieber stets in regelndem Eingriff, so daß auch bei Zuschaltung anderer Verbraucher das Druckgefälle über den Steuerschieber unverändert bleibt und selbst kleine Sprünge, wie sie bei einer stärkeren Feder auftreten können, vermieden werden.

Äußerst vorteilhaft ist eine Ausbildung gemäß Anspruch 9, dessen Gegenstand, vor allem in Verbindung mit Anspruch 8 eine vorteilhafte Kombination ergibt. Dadurch wird ein Driften des Drosselschiebers im Bereich seiner Regelstellung vermieden und ihm eine genau definierte Stellung zugewiesen, welche die Auslegung der Feder am Drosselschieber erleichtert. Das am Steuerschieber verfügbare Druckgefälle läßt sich dadurch genauer einhalten.

Gemäß Anspruch 11 ergibt sich eine äußerst kompakte Steuereinrichtung, die mit einer einzigen Steuerkammer am Steuerschieber auskommt.

## Zeichnung

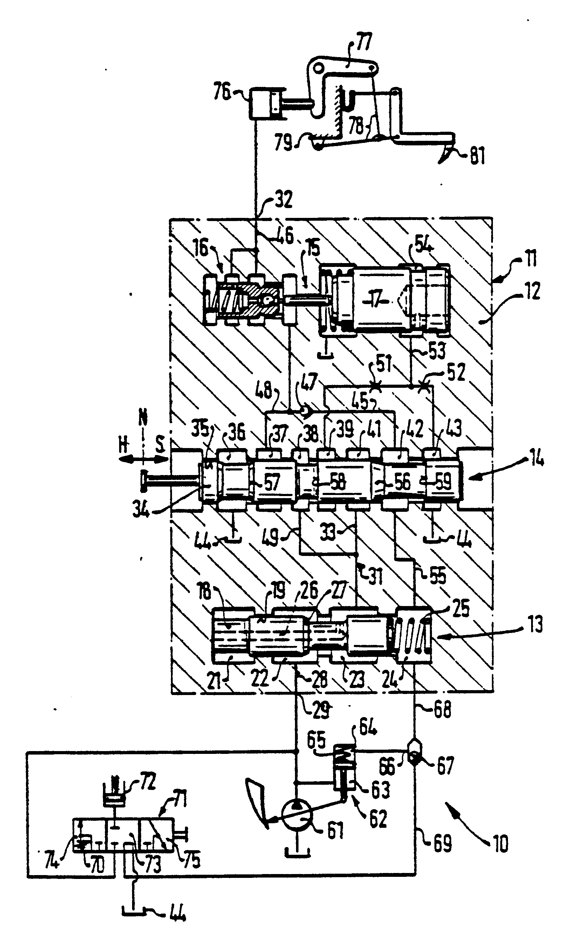

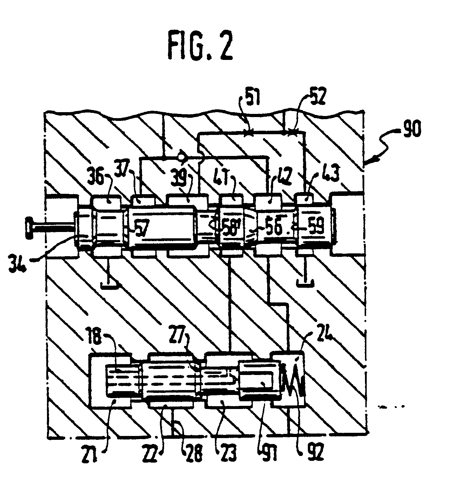

Ein Ausführungsbeispiel der Erfindung ist in der Zeichnung dargestellt und in der nachfolgenden Beschreibung näher erläutert. Die Figur 1 zeigt im wesentlichen einen Längsschnitt durch die hydraulische Steuereinrichtung in vereinfachter Darstellung in Stellung Neutral und Figur 2 einen teilweisen Längsschnitt durch eine zweite Ausführungsform der Steuereinrichtung.

## Beschreibung der Ausführungsbeispiele

Die Figur 1 zeigt eine Steuereinrichtung 10 mit einem Regelwegeventil 11, das zur Hubwerksregelung an einem landwirtschaftlichen Fahrzeug, insbesondere einem Traktor mit angelenktem Pflug, verwendet wird.

Das Regelwegeventil 11 hat ein Gehäuse 12, in dem in drei zueinander parallelen Achsen ein Drosselventil 13, ein Steuerventil 14 sowie ein Sperrblock 15, bestehend aus Sperrventil 16 und zugehörigem Aufstoßkolben 17, angeordnet sind.

Das Drosselventil 13 hat einen Drosselschieber 18, der im Gehäuse 12 in einer Schieberbohrung 19 gleitet. In der Schieberbohrung 19 sind nebeneinanderliegend, bezogen auf die Figur von links nach rechts gesehen, durch ringförmige Erweiterungen ein Druckraum 21, ein Einlaßraum 22, ein Auslaßraum 23 sowie ein Federraum 24 ausgebildet. Der Drosselschieber 18 wird von einer in dem Federraum 24 angeordneten Feder 25 sowie von den Drücken in dem Federraum 24 und in dem Druckraum 21 beaufschlagt. Zu diesem Zweck steht der Druckraum 21 über im Drosselschieber 18 angeordnete Steuerkanäle 26 mit dem Auslaßraum 23 in Verbindung. Die Feder 25 belastet den Drosselschieber 18 in Richtung der gezeichneten Ausgangsstellung, in welcher eine am Drosselschieber 18 ausgebildete Steuerfase 27 die Verbindung vom Einlaßraum 22 zum Auslaßraum 23 voll aufsteuert. Der Einlaßraum 22 ist über einen ersten Leitungsabschnitt 28 mit einem Eingang 29 des Regelwegeventils 11 verbunden, von dem eine Arbeitsleitung 31 nach dem Drosselventil 13 über das Steuerventil 14 und den Sperrblock 15 zu einem Ausgang 32 führt. Als Teil dieser Arbeitsleitung 31 führt vom Auslaßraum 23 ein zweiter Leitungsabschnitt 33 zum nachfolgenden Steuerventil 14.

Das Steuerventil 14 hat einen Steuerschieber 34, der in einer zweiten Schieberbohrung 35 dicht und gleitend geführt ist. In letzterer (35) sind wiederum nebeneinanderliegend und von links nach rechts gesehen, bezogen auf die Figur, eine erste Rücklaufkammer 36, eine Ablaufkammer 37, eine erste (38) sowie eine zweite Steuerkammer 39, eine erste (41) und eine zweite Arbeitskammer 42 sowie eine zweite Rücklaufkammer 43 angeordnet. Die beiden außenliegenden Rücklaufkammern 36, 43 sind im Tank 44 entlastet. In die erste Arbeitskammer 41 mündet der zweite Abschnitt 33 der Arbeitsleitung 31. Von der zweiten Arbeitskammer 42 führt ein dritter Leitungsabschnitt 45 als Teil der Arbeitsleitung 31 zum Sperrventil 16, von dem ein vierter Leitungsabschnitt 46 zum Ausgang 32 führt. In den dritten Leitungsabschnitt 45 ist ein die zweite Arbeitskammer 42 absicherndes Rückschlagventil 47 geschaltet. Ferner führt vom Ausgang 32 über das Sperrventil 16 eine Rücklaufleitung 48 zur Ablaufkammer 37 und weiter über die erste Rücklaufkammer 36 zum Tank 44. Von dem zweiten Leitungsabschnitt 33 der Arbeitsleitung 31 zweigt eine zum Tank 44 geführte erste Steuerleitung 49 ab, die zuerst in die erste Steuerkammer 38 führt und von der zweiten Steuerkammer 39 weiter über eine erste (51) sowie eine zweite Drosselstelle 52 zur zweiten Rücklaufkammer 43 und damit weiter zum Tank 44 geführt ist. Die erste Steuerleitung 49 weist im Bereich zwischen den beiden Drosselstellen 51, 52 eine Abzweigung 53 auf, welche den jeweiligen Zwischendruck einer dem Aufstoßkolben 17 zugeordneten Druckkammer 54 zuleitet. Ferner verbindet eine zweite Steuerleitung 55 die zweite Arbeitskammer 42 im Steuerventil 14 mit dem Federraum 24 im

Drosselventil 13.

Am Steuerschieber 34 selbst ist eine erste Steuerkante 56 ausgebildet, um den über die Arbeitsleitung 31 zufließenden Druckmittelstrom proportional zur Auslenkung des Steuerschiebers 34 zu steuern. In der gezeichneten Neutralstellung des Steuerschiebers 34 unterbricht diese erste Steuerkante 56 die Verbindung zwischen den beiden Arbeitskammern 41, 42. Ferner weist der Steuerschieber 34 eine zweite Steuerkante 57 auf, um in entsprechender Weise den über die Rücklaufleitung 48 zum Tank abfließenden Druckmittelstrom zu steuern. Auch die zweite Steuerkante 57 unterbricht in der gezeichneten Neutralstellung die Verbindung zwischen der Ablaufkammer 37 und der ersten Rücklaufkammer 36. Der Steuerschieber 34 hat fernerhin eine dritte Steuerkante 58, mit der er die Verbindung zwischen den beiden Steuerkammern 38, 39 schaltet und somit eine Verbindung über die erste Steuerleitung 49 zum Tank 44 beeinflußt. In Neutralstellung unterbricht die dritte Steuerkante 58 die erste Steuerleitung 49. Ferner besitzt der Steuerschieber 34 eine vierte Steuerkante 59, mit der er die Verbindung von der zweiten Arbeitkammer 42 zur zweiten Rücklaufkammer 43 beeinflußt und somit die Entlastung des Federraums 24 des Drosselventils 13 steuert. In der gezeichneten Neutralstellung öffnet die vierte Steuerkante 59 die erwähnte Verbindung.

Die Steuereinrichtung 10 weist ferner eine Verstellpumpe 61 mit zugehöriger Stelleinrichtung 62 auf, wobei der Ausgang der Verstellpumpe 61 an den Eingang 29 des Regelwegeventils 11 angeschlossen ist. Ein Kolbenstangenraum 63 der Verstelleinrichtung 62 wird vom Ausgangsdruck der Verstellpumpe 61 beaufschlagt, so daß die Verstelleinrichtung 62 die Verstellpumpe 61 in Richtung minimaler Fördermenge zu verstellen sucht. In einem Zylinderraum 64 der Verstelleinrichtung 62 ist eine Reglerfeder 65 angeordnet, welche die Verstellpumpe 61 in Richtung maximaler Fördermenge zu verstellen sucht. Solange kein Druckmittel von den Hydromotoren im System benötigt wird, endet diese Förderstromverstellung der Verstellpumpe 61 durch die Reglerfeder 65 nahe bei Null, wobei nur noch die Leckverluste im System ausgeglichen werden. Der hierbei von der Verstellpumpe 61 erzeugte und von der Kraft der Reglerfeder 65 abhängige Druck wird im folgenden als Ausgangsdruck bezeichnet. Ferner steht der Zylinderraum 64 der Verstelleinrichtung 62 mit dem Mittelanschluß 66 eines Wechselventils 67 in Verbindung. Der eine Seitenanschluß des Wechselventils 67 ist über eine erste Lastdruckleitung 68 mit dem Federraum 24 des Drosselventils 13 verbunden. Vom anderen Seitenanschluß des Wechselventils 67 führt eine zweite Lastdruckleitung 69 zu einem zweiten Wegeventil 71 für lastunabhängige Steuerung, das parallel zum Regelwegeventil 11 an den Ausgang der Verstellpumpe 61 angeschlossen ist und einen zweiten Hydromotor 72 steuert. Das zweite Wegeventil 71 hat neben einer Mittelstellung 73 eine erste (74) sowie eine zweite Arbeitsstellung 75.

Der am Ausgang 32 des Regelwegeventils 11 angeschlossene einfachwirkende Hydromotor 76 ist ein Kraftheber, der über einen Hubarm 77 und ein übliches Dreipunktgestänge 78 einen am Traktorrahmen 79 angelenkten Pflug 81 betätigen kann.

Die Reglerfeder 65 in der Verstelleinrichtung 62 ist so ausgerichtet, daß der von ihr verursachte Ausgangsdruck der Verstellpumpe 61 lediglich geringfügig kleiner ist als derjenige Druck, der abhängig von der Feder 25 im Drosselventil 13 zum Schalten des Drosselschiebers 18 benötigt wird.

Die Wirkunsweise der Steuereinrichtung 10 wird wie folgt erläutert. Befinden sich der Steuerschieber 34 des Regelventils 11 und der Steuerschieber im zweiten Wegeventil 71 in der gezeichneten Neutralstellung, dann unterbricht die erste Steuerkante 56 im Regelwegeventil 11 sowie auch der Steuerschieber im zweiten Wegeventil 71 jeweils die Verbindung zu den Hydromotoren 76 bzw. 72, so daß der Förderstrom der Verstellpumpe 61 nicht abfließen kann. Er gelangt lediglich in den Kolbenstangenraum 63 der Verstelleinrichtung 62 und steuert die Verstellpumpe 61 in Richtung abnehmender Förderstrom. Die Verstellpumpe 61 fördert lediglich einen kleinen Strom zum Ausgleich von Leckverlusten im System. Dabei arbeitet sie gegen einen sogenannten Ausgangsdruck, der von der Kraft der Reglerfeder 65 in der Verstelleinrichtung 62 abhängt. Der Zylinderraum 64 in der Verstelleinrichtung 62 ist über das Wechselventil 67, die erste Lastdruckleitung 68, die zweite Steuerleitung 55 und die offene, vierte Steuerkante 59 im Steuerventil 14 zum Tank 44 entlastet. Dieser Ausgangsdruck der Verstellpumpe 61 wirkt im Drosselventil 13 über die Steuerkanäle 26 auch in dem Druckraum 21 und somit auf den Drosselschieber 18 entgegen der Kraft der Feder 25. Da die Kraft der Feder 25 jedoch geringfügig überwiegt, hält die Feder 25 den Drosselschieber 18 in der gezeichneten Ausgangsstellung, wobei die Steuerfase 27 die Arbeitsleitung 31 aufsteuert. Da auch die zweite Lastdruckleitung 69 über das zweite Wegeventil 71 zum Tank 44 entlastet ist, kann sich im Zylinderraum 64 der Verstelleinrichtung 62 kein Druck aufbauen. In dieser Neutralstellung des Steuerschiebers 34 unterbricht die erste Steuerkante 56 die Verbindung zwischen den beiden Arbeitskammern 41, 42. Zugleich unterbricht die dritte Steuerkante 58 die erste Steuerleitung 49, so daß von der Verstellpumpe 61 kein Steuerölstrom über die erste Steuerleitung 49 zum Tank 44 abströmen kann. Zudem ist die Druckkammer 54 des Aufstoßkolbens über einen Teil der ersten Steuerleitung 49 zum Tank 44 entlastet, so daß

sich dort kein unerwünschter Druck aufbauen kann. Das Sperrventil 16 in vorgesteuerter Sitzventilbauart sorgt für eine sichere Abdichtung des ersten Hydromotors 76.

Darüber hinaus unterbricht auch die zweite Steuerkante 57 im Steuerventil 14 die Rücklaufleitung 48.

Wird nun der Steuerschieber 34 nach links, bezogen auf die Figur in Richtung Heben ausgelenkt, so öffnet die erste Steuerkante 56 die Verbindung von der ersten (41) zur zweiten Arbeitskammer 42, während die vierte Steuerkante 59 die Verbindung von letzterer (42) zur zweiten Rücklaufkammer 43 unterbricht. Die Folge davon ist, daß die zuvor bestehende Druckdifferenz zwischen den beiden Arbeitskammern 41, 42 sich abbaut, was in gleicher Weise in der Verstelleinrichtung 62 auch im Kolbenstangenraum 63 und im Zylinderraum 64 erfolgt. Die Reglerfeder 65 kann deshalb die Verstellpumpe 61 in Richtung größeren Förderstrom verstellen, obwohl der Förderstrom noch keinen Ausweg findet. Der Einfluß der Kolbenstange der Verstelleinrichtung 62 soll im vorliegenden Zusammenhang vernachlässigt werden. Der Druck am Ausgang der Verstellpumpe 61 wird nun solange steigen, bis das von der Last am Hydromotor 76 zugehaltene Sperrventil 16 sich öffnet und Druckmittel von der Verstellpumpe 61 über die Arbeitsleitung 31 zum ersten Hydromotor 76 strömen kann. Bei diesem über die Arbeitsleitung 31 fließenden Druckmittelstrom stellt sich dann ein neues Gleichgewicht ein und beendet dabei die Bewegung der Verstelleinrichtung 62 in Richtung erhöhter Fördermenge, wenn der über die erste Steuerkante 56 fließende Druckmittelstrom einen Druckabfall bewirkt, der so groß ist, daß er der Wirkung der Reglerfeder 65 entspricht. Demnach bestimmt der von der ersten Steuerkante 56 jeweils aufgesteuerte Durchflußquerschnitt die Größe des zum Hydromotor 76 fließenden Druckmittelstroms, wobei die verfügbare Druckdifferenz von der Reglerfeder 65 bestimmt wird und weitestgehend konstant ist. Während dieses Hebenvorgangs bleibt der Drosselschieber 18 in der gezeichneten Ausgangsstellung, da die von der Reglerfeder 65 verursachte Druckdifferenz, die auch am Drosselschieber 18 wirksam wird, nicht ausreicht, um die Kraft der Feder 25 zu überwinden. Zudem ist die Lage des kugeligen Schließgliedes im Wechselventil 67 nun stabil, da in der ersten Lastdruckleitung 68 ein definierter Lastdruck herrscht, während die zweite Lastdruckleitung 69 zum Tank 44 entlastet ist.

Wird nun während des beschriebenen Hebenvorgangs mit dem Regelwegeventil 11 parallel dazu der zweite Hydromotor 72 mit Hilfe des zweiten Wegeventils 71 betätigt, so wird sich an der beschriebenen Funktion des Regelwegeventils 11 nichts ändern, solange der vom zweiten Hydromotor 72 geforderte Druck niedriger ist als der vom ersten Hydromotor 76 benötigte Druck. Ist jedoch der in der ersten Arbeitsstellung 74 des zweiten Wegeventils 71 verlangte Druck des zweiten Hydromotors 72 höher als der Druck im ersten Hydromotor 76, so gelangt dieser höhere Lastdruck über die zweite Lastdruckleitung 69 und das Wechselventil 67 in den Zylinderraum 64. Die Reglerfeder 65 kann daraufhin die Verstellpumpe 61 weiter in Richtung erhöhter Fördermenge verstellen. Zugleich wächst damit der Druckabfall über die erste Steuerkante 56 im Steuerventil 14. Dieser erhöhte Druckabfall an der ersten Steuerkante 56 wird aber zugleich auch in dem Federraum 24 bzw. dem Druckraum 21 wirksam und kann nun den Drosselschieber 18 gegen die Kraft der Feder 25 nach rechts verstellen, wobei seine Steuerfase 27 die Arbeitsleitung 31 androsselt. Die sich nun über die erste Steuerkante 56 am Steuerschieber 34 einstellende Druckdifferenz wird nun durch die Kraft der Feder 25 bestimmt und damit wiederum im wesentlichen konstant gehalten, unabhängig davon wie hoch der Druck am Ausgang der Verstellpumpe 61 steigt. Die Größe des Druckmittelstroms, der beim Heben des Hydromotors 76 durch die Arbeitsleitung 31 fließt, wird somit wiederum von dem von der ersten Steuerkante 56 aufgesteuerten Durchflußquerschnitt bestimmt. Dies erfolgt bei einem lediglich leicht erhöhten Druckniveau, da die von der Feder 25 bewirkte Druckdifferenz nur wenig über der von der Reglerfeder 65 erzeugten Ausgangs-Druckdifferenz liegt. Unabhängig davon kann hierbei der zweite Hydromotor 72 über das zweite Wegeventil 71 bei höherem Lastdruck parallel betrieben werden. Ein neues Gleichgewicht stellt sich hierbei ein, wenn der von der Verstellpumpe 61 über das zweite Wegeventil 71 fließende Druckmittelstrom an der betreffenden Drossel 70 einen Druckabfall verursacht, welcher der Wirkung der Reglerfeder 65 entspricht.

Wird nun der Steuerschieber 34 aus der Hebenstellung in die gezeichnete Neutralstellung zurückgeschoben während der Steuerschieber des zweiten Wegeventils 71 in seiner ersten Arbeitsstellung 74 verbleibt, so fließt Druckmittel von der Verstellpumpe 61 nur mehr zum zweiten Hydromotor 72. Der erste Hydromotor 76 ist durch das Sperrventil 16 abgesichert. Bei dieser Rückstellung des Steuerschiebers 34 öffnet die vierte Steuerkante 59 die Verbindung von der zweiten Arbeitskammer 42 zum Tank 44. Der Federraum 24 im Drosselventil 13 wird daher zum Tank entlastet. Die Steuerfase 27 am Drosselschieber 18 wird deshalb die Verbindung zwischen dem Einlaßraum 22 und dem Auslaßraum 23 soweit zudrosseln, daß im Auslaßraum 23 wie auch im Druckraum 21 ein durch die Kraft der Feder 25 bestimmter Druck angedrosselt wird. In dem Einlaßraum 22 wird dabei ein Druck herrschen, dessen Größe sich aus der Summe aus dem Lastdruck im zweiten Hydromotor 72 und der von der Reglerfeder 65 erzeugten Druckdifferenz ergibt. Infolge dieser Druckverhältnisse im Drosselventil 13 und infolge des Umstandes, daß die erste Steuerkante 56

sowie die dritte Steuerkante 58 im Steuerventil 14 geschlossen sind, wird der Drosselschieber 18 soweit nach rechts wandern, daß sich an der Steuerfase 27 eine begrenzte positive Überdeckung einstellt, so daß sich eine ausgeglichene Leckagebilanz ergibt.

Wird während der parallelen Betätigung des zweiten Wegeventils 71 der Steuerschieber 34 im Regelwegeventil 11 aus der Neutralstellung nach rechts in seine Senkenstellung verschoben, dann steuert die dritte Steuerkante 58 die Verbindung zwischen den beiden Steuerkammern 38 und 39 auf, während zugleich die zweite Steuerkante 57 die Rücklaufleitung 48 öffnet. Der Auslaßraum 23 und damit auch der Druckraum 21 im Drosselventil 13 wird somit über die erste Steuerleitung 49 zum Tank 44 entlastet. Die Feder 25 kann deshalb den Drosselschieber 18 aus der zuvor erwähnten positiven Überdeckung heraus wieder soweit nach links verschieben, bis über dessen Steuerfase 27 ein kleiner Druckmittelstrom fließt. Dieser Steuerstrom gelangt dann über die erste Steuerleitung 49 und die beiden hintereinander geschalteten Drosselstellen 51, 52 zum Tank 44. Dieser Steuerstrom wird infolge der Drosselstellen 51, 52 im Auslaßraum 23 einen solchen Druck aufbauen, welcher der Wirkung der Feder 25 entspricht. Über die Abzweigung 53 kann sich der zwischen den Drosselstellen 51 und 52 aufbauende Druck auch in der Druckkammer 54 des Aufstoßkolbens 17 wirken und das vorgesteuerte Sperrventil 16 mit Hilfe der beide Bauelemente koppelnden Nadel öffnen. Vom ersten Hydromotor 76 kann nun Druckmittel über die Rücklaufleitung 48 mit dem geöffneten Sperrventil 16 und der offenen zweiten Steuerkante 57 zum Tank 44 strömen. Das in der Arbeitsleitung 33, 45 liegende Rückschlagventil 47 verhindert dabei, daß das zurückströmende Druckmittel über die zweite Arbeitskammer 42 abströmt. Der zum Aufstoßen des Entsperrkolbens 17 notwendige Druck in der Druckkammer 54 läßt sich leicht mit Hilfe der Abmessungen der Drosselstellen 51, 52 einstellen. Durch diese kaskadenartige Schaltung auf der Steueröleite und die Arbeitsweise des Drosselschiebers 18 wird erreicht, daß der Betätigungsdruck in der Druckkammer 54 stets unabhängig ist von dem von der Verstellpumpe 61 jeweils erzeugten Arbeitsdruck. Das Senken des Pfluges 81 kann somit unabhängig von der parallelen Betätigung des zweiten Hydromotors 72 mit stets gleichbleibender Empfindlichkeit durchgeführt werden.

Wird nun während des beschriebenen Senkenvorgangs am ersten Hydromotor 76 der Steuerschieber des zweiten Wegeventils 71 aus seiner ersten Arbeitsstellung 74 in seine Mittelstellung 73 zurückgeschoben, so wird der zweite Hydromotor 72 hydraulisch blockiert. Zugleich wird die zweite Lastdruckleitung 69 im zweiten Wegeventil 71 zum Tank 44 entlastet. Dies wirkt sich auch im Federraum 64 der Verstelleinrichtung 62 aus. Der von der Verstellpumpe 61 geförderte Arbeitsdruck wirkt nun im Kolbenstangenraum 63 und verschiebt die Stelleinrichtung 62 in Richtung abnehmender Fördermenge der Verstellpumpe 61. Die Verstellpumpe 61 wird dabei solange in dieser Richtung verstellt, bis der von ihr erzeugte Förderstrom genau dem Steuerölstrom entspricht, der über die erste Steuerleitung 49 mit den beiden Drosselstellen 51 und 52 zum Tank 44 fließt. Dabei stellt sich wegen der Wirkung der Reglerfeder 65 am Ausgang der Verstellpumpe 61 der erwähnte Ausgangsdruck ein. Die Folge davon ist, daß auch der Druck in dem Druckraum 21 des Drosselventils 13 nicht größer sein kann und deshalb die Feder 25 den Drosselschieber 18 aus seiner Drosselstellung zurück in die gezeichnete Ausgangsstellung schiebt. Der zum Senken des ersten Hydromotors 76 benötigte Betätigungsdruck in der Druckkammer 54 ändert sich dadurch kaum, da die Reglerfeder 65 nur eine geringfügig geringere Wirkung hat als die Feder 25 am Drosselventil 13. Die Lage des Schließglieds im Wechselventil 67 ist damit wieder unbestimmt, da beide Lastdruckleitungen 69 und 68 zum Tank 44 entlastet sind. Wenn nun der Steuerschieber 34 aus seiner Senkenstellung in seine Neutralstellung zurückgeschoben wird, dann entsteht erneut die in der Figur dargestellte Situation.

Bei vorliegender Steuereinrichtung 10 kann somit ein Regelwegeventil 11 zur Steuerung eines einfachwirkenden Krafthebers, der zudem besonders dicht abgesperrt werden muß, in einem lastdruckabhängig arbeitenden System betrieben werden, wobei die Reaktionen des Regelwegeventils 11 völlig unabhängig sind von den stark unterschiedlichen Versorgungsdrücken. Die Steuereigenschaften des Regelwegeventils 11 ändern sich beim Heben und Senken des Krafthebers 76 nicht, wenn parallel dazu ein zweiter Verbraucher 72 mit unterschiedlichen Arbeitsdrücken betrieben wird.

Die Figur 2 zeigt einen Teil eines zweiten Regelwegeventils 90, das sich vom ersten Regelwegeventil 11 nach Figur 1 wie folgt in drei Punkten unterscheidet, wobei für gleiche Bauelemente gleiche Bezugszeichen verwendet werden:

Beim zweiten Regelwegeventil 90 entfällt die erste Steuerkammer 38 mit ihrer Verbindung zur Arbeitsleitung 31 vollständig. Die dritte Steuerkante 58' ist soweit nach rechts verlegt, daß sie nun mit dem Gehäusesteg zwischen zweiter Steuerkammer 39 und erster Arbeitskammer 41 zusammenarbeitet und zwar in der Weise, daß sie bei Auslenkung des Steuerschiebers 34 wie bisher gegensinnig zur ersten Steuerkante 56 wirksam wird. Die Steuerleitung 49 zweigt wie bisher stromaufwärts vom Steuerschieber 34 von der Arbeitsleitung 31 bzw. der ersten Arbeitskammer 41 ab, so daß sich trotz kompakter Bauweise infolge Wegfalls einer Steuerkammer 38 deswegen keine geänderte Funktion am Regelwegeventil 90 ergibt.

Ferner ist am Drosselschieber 18 an dem zwischen Auslaßraum 23 und Federraum 24 liegenden Kolbenabschnitt eine Steuerfläche 91 angeordnet, die ab einer gewissen Überdeckung an der Steuerfase 27 den Auslaßraum 23 mit dem Federraum 24 verbindet. Steuerfläche 91 und Steuerfase 27 arbeiten gegensinnig zueinander und ermöglichen eine schwache positive Überdeckung von z.B. 0,5 mm, so daß die Auslaßkammer 23 hydraulisch blockierbar ist.

Der Drosselschieber 18 ist von einer schwachen Feder 92 belastet, deren zugeordneter Druck nur einen Bruchteil des von der Reglerfeder 65 verursachten Drucks, dem sogenannten Ausgangs- oder Standby-Druck verursacht und insbesondere wenige bar, z.B. 4 bis 6 bar, beträgt.

Die Wirkungsweise des zweiten Regelwegeventils 90 unterscheidet sich von derjenigen des ersten Regelwegeventils 11 vor allem wie folgt:

Bei der auf Seite 14 am Ende des 1. Absatzes beschriebenen Leckagebilanz bei unbetätigtem Steuerschieber 34 und betätigtem zweiten Wegeventil 71, kann am Drosselschieber 18 nach Figur 1 während einer positiven Überdeckung der Steuerfase 27 ein Driften des Drosselschiebers 18 auftreten, das eine Auslegung der Feder 25 erschwert. Durch die Steuerfläche 91 wird nun ab einer kleinen, positiven Überdeckung von z.B. 0,5 mm an der Steuerfase 27 die Auslaßkammer 23 entlastet. Dadurch fällt der den Drosselschieber antreibende Druck in der Auslaßkammer 23 und somit im Druckraum 21 so lange ab, bis ein Gleichgewicht gegen die Feder 92 erzielt wird. Dies geschieht bei einer Öffnung der Steuerfläche 91 von nahezu Null, da der abzuführende Leckstrom sehr gering und der benötigte Querschnitt also entsprechend klein ist. Dies führt zu einer genau definierten Stellung des Drosselschiebers 18 und erlaubt eine genaue und leichte Auslegung der Feder 92.

Während die Steuerfläche 91 an sich auch mit der stärkeren Feder 25 verwendbar ist, ergibt sie in Verbindung mit der schwächeren Feder 92 eine besonders vorteilhafte Kombination. Ist der Einfluß der Feder 92 schwächer als die von der Reglerfeder 65 verursachte Standby-Druckdifferenz, so befindet sich der Drosselschieber 18 stets im drosselnden Zustand. Über die erste Steuerkante 56 am Steuerschieber 34 wirkt somit nur die von der Feder 92 verursachte, kleinere Druckdifferenz, während der Unterschiedsbetrag von letzterer zur Standby-Druckdifferenz nun an der Steuerfase 27 abfällt. Als Steuerschieber 34 können deshalb Schieberelemente verwendet werden, wie sie in offenen Kreisen üblich sind und die mit wenigen bar Druckdifferenz arbeiten können im Unterschied zu der im geschlossenen Kreis um ein Vielfaches höheren Druckdifferenz mit entsprechend angepaßten Steuerelementen. Die schwächere Feder 92 erlaubt auch eine günstigere Kennlinie, baut kompakter und ist billiger; in der Energiebilanz ergibt sich zwischen schwacher und starker Feder 25 jedoch kein wesentlicher Unterschied. An der ersten Steuerkante 56 wirkt somit nicht nur in Neutralstellung das von der Feder 92 bewirkte, kleinere Druckgefälle ; letzteres wirkt ebenso in den Stellungen Heben und Senken. Dabei bewirkt die Steuerfläche 91 zusätzlich, daß dieses Druckgefälle möglichst genau eingehalten wird.

Durch den ständig drosselnden Drosselschieber 18 bleibt das an der ersten Steuerkante 56 wirksame Druckgefälle ebenfalls konstant und wird nicht abwechselnd von der Feder 25 oder der Reglerfeder 65 bestimmt, so daß selbst ein kleiner Sprung - wie dies bei der stärkeren Feder 25 nach Figur 1 auftritt - bei der schwächeren Feder 92 vermieden wird.

Selbstverständlich sind Änderungen an den gezeigten Steuereinrichtungen möglich, ohne vom Gedanken der Erfindung abzuweichen. So kann der Steuerschieber 34 im Regelwegeventil 11 in beliebiger Weise betätigt werden. Auch kann der gleichbleibende Betätigungsdruck am Aufstoßkolben 17 in an sich bekannter Weise zu einer Regelung des Senkenstromes herangezogen werden. Anstelle des einen zweiten Wegeventil 71 können auch noch weitere Wegeventile zugeschaltet und betrieben werden. Auch ist die Steuereinrichtung 10 nicht auf eine Anwendung zur Pflugregelung eingeschränkt, sondern kann auch zur Lösung gleichartiger Probleme bei z.B. Baufahrzeugen und anderen Fahrzeugen eingesetzt werden.

## Patentansprüche

1. Hydraulische Steuereinrichtung (10) für ein von einem Hydromotor (76) angetriebenes, insbesondere an einem landwirtschaftlichen Fahrzeug angebautes Arbeitsgerät (81), mit einem aus Sperrventil (16) und Aufstoßkolben (17) bestehenden Sperrblock (15), mit einem den Sperrblock (15) steuernden Steuerschieber (34), der eine den Druckmittelstrom zum Hydromotor (76) beim Heben beeinflussende, erste Steuerkante (56) und eine den vom Hydromotor zum Tank (44) abfließenden Druckmittelstrom beim Senken beeinflussende zweite Steuerkante (57) aufweist, sowie mit einem Drosselschieber (18), der zwischen den Steuerschieber (34) und einen Eingang (29) der Steuereinrichtung in eine Arbeitsleitung (31) geschaltet ist, die vom Eingang (29) über den Drosselschieber (18), den Steuerschieber (34) und das Sperrventil (16) zu einem Ausgang (32) der Steuereinrichtung geführt ist, wobei der Drosselschieber (18) von einer Feder (25) in einem stirnseitigen Federraum (24) in Richtung einer die Arbeitsleitung (31) aufsteuernden Weise und von einer an der ersten Steuerkante (56) des Steuerschiebers (34) auftretenden Druckdifferenz in Gegenrichtung beaufschlagbar ist, wozu am Drosselschieber (18) dem Federraum (24) ein Druckraum (21) gegenüberliegt, und wobei in Stellung Senken (S) des Steuerschiebers (34) der Federraum (24) zum Tank (44) entlastet ist, und mit einer von der Arbeitsleitung (31) stromaufwärts vom Steuerschieber (34) abzweigenden, vom Steuerschieber beeinflußbaren und zum Aufstoßkolben (17) über eine Drosselstelle (51) geführten Steuerleitung (49, 53), dadurch gekennzeichnet, daß an den Eingang (29) eine Verstellpumpe (61) angeschlossen ist, deren Verstelleinrichtung (62) vom Arbeitsdruck der Verstellpumpe (61) in Richtung abnehmender Fördermenge und von einer Reglerfeder (65) in Richtung zunehmender Fördermenge belastet ist, daß ein der Reglerfeder (65) zugeordneter Zylinderraum (64) über ein den maximalen Druck auswählendes Ventil (67) mit dem Federraum (25) am Drosselschieber (18) oder mit einem Lastdruckabgriff eines einem zweiten Hydromotor (72) zugeordneten Wegeventils (71) verbindbar ist, daß die Steuerleitung (49, 53) zum Aufstoßkolben (17) über eine zusätzliche Drosselstelle (52) mit dem Tank (44) verbunden ist, wobei die Verbindung stromabwärts der ersten Drosselstelle (51) von der Steuerleitung (49, 53) abzweigt, und daß der Druckraum (21) am Drosselschieber (18) mit der Arbeitsleitung (31) stromabwärts vom Drosselschieber (18) Verbindung hat.

2. Steuereinrichtung nach Anspruch 1, dadurch gekennzeichnet, daß dem Steuerschieber (34) wenigstens sechs Kammern (36 bis 39, 41 bis 43) so zugeordnet sind, daß die der ersten Steuerkante (56) zugeordneten, erste (41) und zweite Arbeitskammer (42) einerseits sowie andererseits die der zweiten Steuerkante (57) zugeordnete Ablauf- (37) und erste Rücklaufkammer (36) zwischen sich wenigstens eine der ersten Steuerleitung (49) zugeordnete Steuerkammer (38, 39) einschließen und daß die erste (36) sowie eine zweite Rücklaufkammer (43) außen liegen.

3. Steuereinrichtung nach Anspruch 2, dadurch gekennzeichnet, daß der vom Drosselschieber (18) kommende Leitungsabschnitt (33) der Arbeitsleitung (31) mit der ersten Arbeitskammer (41) und der zum Sperrblock (15) führende Leitungsabschnitt (45) mit der zweiten Arbeitskammer (42) Verbindung haben und daß die zweite Arbeitskammer (42) mit dem Federraum (24) des Drosselschiebers (18) Verbindung hat und vom Steuerschieber (34) mit der zweiten Rücklaufkammer (43) verbindbar ist.

4. Steuereinrichtung nach Anspruch 2 oder 3, dadurch gekennzeichnet, daß der Steuerschieber (34) eine Neutralstellung (N) aufweist, in der er die Arbeitsleitung (31), die erste Steuerleitung (49) und die Rücklaufleitung (48) unterbricht und den Federraum (24) des Drosselschiebers (18) zum Tank (44) entlastet, in einer Hebenstellung (H) diese Entlastung zum Tank (44) unterbricht, die Arbeitsleitung (31) aufsteuert und die erste Steuerleitung (49) und die Rücklaufleitung (48) unterbricht und in einer Senkenstellung (S) die Rücklaufleitung (48) und die Steuerleitung (49) aufsteuert und den Federraum (24) entlastet, während die Arbeitsleitung (31) unterbrochen ist.

5. Steuereinrichtung nach einem der Ansprüche 1 bis 4, dadurch gekennzeichnet, daß der Drosselschieber (18) lediglich eine Einlaß- (22) und eine Auslaßkammer (23), die der Arbeitsleitung (31) zugeordnet sind, durchdringt und er stirnseitig in den Druckraum (21) und den Federraum (24) ragt.

6. Steuereinrichtung nach einem der Ansprüche 1 bis 5, dadurch gekennzeichnet, daß das den maximalen Druck auswählende Ventil ein Wechselventil (67) ist, dessen Mittelanschluß (66) mit dem die Reglerfeder (65) aufnehmenden Zylinderraum (64) der Verstelleinrichtung (62) Verbindung hat.

7. Steuereinrichtung nach einem der Ansprüche 1 bis 6, dadurch gekennzeichnet, daß der von der Reglerfeder (65) verursachte Druck nur geringfügig kleiner ist als der von der Feder (25) am Drosselschieber (18) verursachte Druck.

8. Steuereinrichtung nach einem der Ansprüche 1 bis 6, dadurch gekennzeichnet, daß der von der Feder (92) am Drosselschieber (18) verursachte Druck wesentlich kleiner ist als der von der Reglerfeder (65) verursachte Druck, insbesondere im Bereich von in offenen Kreisläufen verwendeten Druckgefällen von wenigen bar liegt.

9. Steuereinrichtung nach einem der Ansprüche 1 bis 8, bei der der Drosselschieber (18) eine die Verbindung zwischen einem Einlaßraum (22) und einem Auslaßraum (23) beeinflussende Steuerfase (27) aufweist, dadurch gekennzeichnet, daß der Drosselschieber (18) eine Steuerfläche (91) aufweist, die gegensinnig zur Steuerfase (27) arbeitet und eine Verbindung vom Auslaßraum (23) zum Federraum (24) steuert.

10. Steuereinrichtung nach Anspruch 9, dadurch gekennzeichnet, daß Steuerfase (27) und Steuerfläche (91) so aufeinander abgestimmt sind, daß sie eine positive Überdeckung ergeben.

11. Steuereinrichtung nach Anspruch 2, dadurch gekennzeichnet, daß zwischen der zulaufseitigen Arbeitskammer (41) und der Ablaufkammer (37) eine einzige Steuerkammer (39) angeordnet ist.

## Claims

1. Hydraulic control apparatus (10) for an implement (81), which is driven by a hydraulic motor (76) and is attached in particular to an agricultural vehicle, with a locking block (15) consisting of lock valve (16) and push-open plunger (17), with a control slide valve (34), which controls the locking block (15) and has a first control edge (56) influencing the pressure medium flow to the hydraulic motor (76) during raising and a second control edge (57) influencing the pressure medium flow flowing away from the hydraulic motor to the tank (44) during lowering, and also with a throttle slide valve (18) which is connected between the control slide valve (34) and an inlet (29) of the control apparatus into a working line (31), which is taken from the inlet (29) via the throttle slide valve (18), the control slide valve (34) and the lock valve (16) to an outlet (32) of the control apparatus, the throttle slide valve (18) being adapted so that it is impinged by a spring (25) in a spring space (24) at the end in the direction of a controlled opening of the working line (31) and so that it is opposed by a pressure difference occurring at the first control edge (56) of the control slide valve (34), for which purpose there is at the throttle slide valve (18) a pressure space (21) opposite the spring space (24), and the spring space (24) being relieved with respect to the tank (44) in the lowering position (S) of the control slide valve (34), and with a control line (49, 53) which branches off from the working line (31) upstream of the control slide valve (34), is adapted so that it is influenced by the control slide valve and is taken to the push-open plunger (17) via a throttle point (51), characterized in that the input (29) has connected to it a variable displacement pump (61), the displacement device (62) of which is loaded by the working pressure of the variable displacement pump (61) in the direction of decreasing displacement and by a governor spring (65) in the direction of increasing displacement, in that a cylinder space (64) assigned to the governor spring (65) is adapted so that it connects via a valve (67) selecting the maximum pressure to the spring space (25) at the throttle slide valve (18) or to a load pressure pickup of a directional valve (71) assigned to a second hydraulic motor (72), in that the control line (49, 53) to the push-open plunger (17) is connected to the tank (44) via an additional throttle point (52), the connection branching off from the conttol line (49, 53) downstream of the first throttle point (51), and in that the pressure space (21) at the throttle slide valve (18) has connection with the working line (31) downstream of the throttle slide vvalve (18).

2. Control apparatus according to Claim 1, characterized in that the control slide valve (34) is assigned at least six chambers (36 to 39, 41 to 43) such that the first working chamber (41) and second working chamber (42) assigned to the first control edge (56) on the one hand and on the other hand the drainage chamber (37) and first return chamber (36) assigned to the second control edge (57) between them enclose at least one control chamber (38, 39) assigned to the first control line (49), and in that the first return chamber (36) and a second return chamber (43) lie on the outside.

3. Control apparatus according to Claim 2, characterized in that the line section (33) of the working line (31) coming from the throttle slide valve (18) has connection with the first working chamber (41) and the connection with the second working chamber (42), and in that the second working chamber (42) has connection with the spring space (24) of the throttle slide valve (18) and is adapted so that it is connected by the control slide valve (34) to the second return chamber (43).

4. Control apparatus according to Claim 2 or 3, characterized in that the control slide valve (34) hasa neutral position (N), in which it interrupts the working line (31), the first control line (49) and the return line (48) and relieves the spring space (24) of the throttle slide valve (18) with respect to the tank (44), in a raising position (H) interrupts this relief with respect to the tank (44), opens the working line (31) and interrupts the first control line (49) and the return line (48) and, in a lowering position (S), opens the return line (48) and the control line (49) and relieves the spring space (24), while the working line (31) is interrupted.

5. Control apparatus according to one of Claims 1 to 4, characterized in that the control slide valve (18) only penetrates an admission chamber (22) and a discharge chamber (23), which are assigned to the working line (31), and it protrudes at the ends into the pressure space (21) and the spring space (24).

6. Control apparatus according to one of Claims 1 to 5, characterized in that the valve selecting the maximum pressure is a changeover valve (67), the medium connection (66) of which has connection with the cylinder space (64) of the adjustment device (62) receiving the governor spring (65).

7. Control apparatus according to one of Claims 1 to 6, characterized in that the pressure caused by the governor spring (65) is only slightly smaller than the pressure caused by the spring (25) at the throttle slide valve (18).

8. Control apparatus according to one of Claims 1 to 6, characterized in that the pressure caused by the to 6, characterized in that the pressure caused by the spring (92) at the throttle slide valve (18) is substantially smaller than the pressure caused by the governor spring (65), in particular lies in the range of pressure gradients of a few bar used in open circuits.

9. Control appararatus according to one of Claims to 8, in which the throttle slide valve (18) has a control bevel (27) influencing the connection between an admission space (22) and a discharge space (23), characterized in that the throttle slide valve (18) has a control area (91) which operates in the opposite sense to the control bevel (27) and controls a connection from the discharge space (23) to the spring space (24).

10. Control apparatus according to Claim 9, characterized in that control bevel (27) and control area (91) are so matched that they produce a positive overlap.

11. Control apparatus according to Claim 2, characterized in that a single control chamber (39) is arranged between the working chamber (41) on the supply side and the drainage chamber (37).

## Revendications

1°) Dispositif de commande hydraulique (10) pour un outil (81) entraîné par un moteur hydraulique (76) notamment porté par un véhicule agricole, comportant un bloc d'arrêt (15) composé d'un piston d'ouverture (17) et d'un tiroir de commande (34) commandant le bloc d'arrêt (15), ayant une première arête de commande (76) qui, lors du soulèvement, agit sur le flux de fluide comprimé allant vers le moteur hydraulique (76) ainsi qu'une seconde arête de commande (57) qui, lors de l'abaissement influence le flux de fluide sous pression s'écoulant du moteur hydraulique vers le réservoir (44), ainsi qu'un tiroir d'étranglement (18) monté entre le tiroir de commande (34) et une entrée (29) de l'installation de commande dans une conduite de fonctionnement (31) allant de l'entrée (29) en passant par le tiroir d'étranglement (18), le tiroir de commande (34) et la soupape d'arrêt (16) jusqu'à une sortie (32) de l'installation de commande, le tiroir d'étranglement (18) étant sollicité par un ressort (25) logé dans une chambre à ressort (24) située du côté avant, dans une direction qui commande l'ouverture de la conduite de fonctionnement (31) et dans la direction opposée par la différence de pression engendrée au niveau de la première arête de commande (56) du tiroir de commande (34), une chambre de pression (21) étant prévu au niveau du tiroir d'étranglement (18) de manière opposée à la chambre à ressort (24), et pour la position d'abaissement (S) du tiroir de commande (34), la chambre à ressort (24) s'évacue vers le réservoir (44), ainsi qu'une conduite de commande (49, 53) en dérivation de la conduite de fonctionnement (31) en amont du tiroir de commande (34), conduite qui peut être influencée par le tiroir de commande et qui va vers le piston d'ouverture (17) en passant par un point d'étranglement (51), caractérisé en ce qu'une pompe de réglage (61) est reliée à l'entrée (29), pompe dont le dispositif de réglage (62) est chargé par la pression de fonctionnement de la pompe de réglage (61) dans le sens du débit décroissant et par un ressort de réglage (65) dans le sens du débit croissant, en ce qu'une chambre de cylindre (64) associée au ressort de réglage (65) peut être reliée par une soupape (67) choisissant la pression maximale à la chambre de ressort (25) surl le tioir d'étranglement (18) ou encore être reliée à une prise de pression de charge d'un tiroir directionnel (71) associé à un second moteur hydraulique (72), en ce que la conduite de commande (49, 53) est reliée au piston d'ouverture (17) par un point d'étranglement supplémentaire (52) allant au réservoir (44), la liaison dérivant en aval du premier point d'étranglement (51) de la conduite de commande (49, 53), et en ce que la chambre de pression (21) du tiroir d'étranglement (18) est reliée à la conduite de fonctionnement (31) en aval du tiroir d'étranglement (18).

2°) Installation de commande selon la revendication 1, caractérisée en ce que le tiroir de commande (34) comporte au moins six chambres (36 à 39, 41 à 43) et en ce que d'une part la première (41) et la seconde (42) chambres de travail associées à la première arête de commande (56) et d'autre part la chambre d'évacuation (37) et la première chambre de retour (38) associées à la seconde arête de commande (57) ont entre elles au moins une chambre de commande (38, 39) associée à la première conduite de commande (49) et en ce que la première chambre de retour (36) ainsi qu'une seconde chambre de retour (43) sont fixées à l'extérieur.

3°) Installation de commande selon la revendication 2, caractérisée en ce que le segment de conduite (33) provenant du tiroir d'étranglement (18) et appartenant à la conduite de fonctionnement (31) communique avec la première chambre de travail (41) et le segment de conduite (45) allant vers le bloc d'arrêt (15) et la seconde chambre de travail (42) et en ce que la seconde chambre (42) est reliée à la chambre à ressort (24) du tiroir d'étranglement (18) et peut être reliée par le tiroir de commande (34) à la seconde chambre de retour (43).

4°) Dispositif de commande selon la revendication 2 ou 3, caractérisé en ce que le tiroir de commande (34) présente une position neutre (N) pour laquelle il coupe la conduite de fonctionnement (31), la première conduite de commande (49) et la conduite de retour (48) et décharge la chambre à ressort (24) du tiroir d'étranglement (18) vers le réservoir (44), une position de soulèvement (M) qui coupe l'évacuation vers le réservoir (44), commande l'ouverture de la conduite de fonctionnement (31) et coupe la première conduite de commande (49) et la conduite de retour (48), ainsi qu'une position d'abaissement (S) qui commande l'ouverture de la conduite de retour (48) et de la conduite de commande (49) et décharge la chambre à ressort (24), la conduite de fonctionnement (31) étant coupée.

5°) Dispositif de commande selon l'une des revendications 1 à 4, caractérisé en ce que le tiroir d'étranglement (18) traverse uniquement une chambre d'entrée (22) et une chambre de sortie (23) associées à la conduite de fonctionnement (31) et que par sa face frontale, ce tiroir pénètre dans la chambre de pression (21) et dans la chambre de ressort (24).

6°) Dispositif de commande selon l'une des revendications 1 à 5, caractérisé en ce que la soupape choisissant la pression maximale est une soupape alternative (67) dont le branchement médian (66) est relié à la chambre de cylindre (64) qui reçoit le ressort de réglage (65) de l'installation de réglage (62).

7°) Installation de commande selon l'une des revendications 1 à 6, caractérisée en ce que la pression engendrée par le ressort de réglage (65) n'est que légèrement plus faible que celle engendrée par le ressort (25) du tiroir d'étranglement (18).

8°) Dispositif de commande selon l'une des revendications 1 à 6, caractérisé en ce que la pression engendrée par le ressort (92) sur le tiroir d'étranglement (18) est considérablement plus faible que la pression engendrée par le ressort de réglage (65) notamment cette différence se situe dans la zone de quelques bars pour des chutes de pression utilisées dans des circuits ouverts.

9°) Dispositif de commande selon l'une des revendications 1 à 8 dans lequel le tiroir d'étranglement (18) comporte une phase de commande (27) influançant la liaison entre une chambre d'entrée (22) et une chambre de sortie (23), caractérisé en ce que le tiroir d'étranglement (18) comporte une surface de commande (92) qui fonctionne en sens opposé à la phase de commande (27) et commande une liaison entre la chambre de sortie (23) et la chambre à ressort (24).

10°) Dispositif de commande selon la revendication 9, caractérisé en ce que la phase de commande (27) et la surface de commande (91) sont définies respectivement de façon à se chevaucher de manière positive.

11°) Dispositif de commande selon la revendication 2, caractérisé par une seule chambre de commande (39) entre la chambre de travail (41) située du côté de la fermeture et la chambre de sortie (37).

# FIG. 2